# FASCICULE DE BREVET EUROPEEN

(11) **EP 0 464 292 B1**
(45) Date de publication et mention de la délivrance du brevet: **18.01.1995**
(21) Numéro de dépôt: 90401965.0
(22) Date de dépôt: 06.07.1990
(51) Int. Cl.: F04D 19/04, G01M 3/22

(54) **Ensemble mécanique de pompage pour vide secondaire et installation de détection de fuite utilisant un tel ensemble**
Zweite Stufe für mechanische Vakuumpumpeinheit und Lecküberwachungssystem zur Anwendung dieser Einheit
Second stage mechanical vacuum pumping unit and leak detection system using such a unit

(43) Date de publication de la demande: 08.01.1992
(73) Titulaire: ALCATEL CIT, 75008 Paris (FR)
(72) Inventeur: Baret, Gilles, F-74000 Annecy (FR); Perrillat-Amede, Denis, F-74940 Annecy Le Vieux (FR)
(74) Mandataire: Weinmiller, Jürgen

(56) Documents cités:
- EP-A- 0 072 892
- EP-A- 0 283 736
- EP-A- 0 344 345
- DE-A- 2 049 117
- DE-C- 910 204
- FR-A- 887 499
- FR-A- 2 604 522
- US-A- 3 520 176

## Description

La présente invention concerne un ensemble mécanique de pompage pour vide secondaire ainsi qu'une installation de détection de fuite utilisant un tel ensemble.

On connaît par le document FR 887 499 une pompe moléculaire de type Holweck ; le document EP 0 344 345 décrit aussi un système de pompage pour un dispositif de détection de fuite. Par ailleurs, le brevet européen 0 072 892 décrit un ensemble mécanique de pompage pour vide secondaire comprenant deux étages de pompage, le premier étage ayant une entrée d'aspiration, le second étage ayant un orifice d'aspiration, ladite entrée et ledit orifice débouchant tous les deux à l'extérieur, les deux étages ayant une sortie commune de refoulement.

Cet ensemble mécanique de pompage est utilisé pour la recherche de fuite à contre-courant au moyen d'un gaz traceur, un spectromètre étant relié à l'entrée d'aspiration du premier étage, tandis que l'enceinte à contrôler est reliée à l'orifice d'aspiration du second étage et une pompe à vide préliminaire étant reliée à la sortie commune de refoulement.

Dans ce document, les deux étages de pompage sont disposés axialement l'un derrière l'autre et sont du type turbomoléculaire à ailettes rotoriques et statoriques.

Ce système permet d'effectuer, en contre-courant, une détection de fuite avec une bonne sensibilité et avec un temps de réponse court.

La présente invention a pour but de proposer un ensemble mécanique de pompage de fabrication plus simple et de coût réduit et qui peut fonctionner à des pressions de refoulement élevées de l'ordre du millibar avec un rendement en puissance bien supérieur à celui d'une pompe du type du document cité pour des pressions de refoulement supérieures à 10⁻¹ m bar.

L'invention a ainsi pour objet un ensemble mécanique de pompage pour vide secondaire comprenant deux étages de pompage, le premier étage ayant une entrée d'aspiration, le second étage ayant un orifice d'aspiration, ladite entrée et ledit orifice débouchant tous les deux à l'extérieur, les deux étages ayant une sortie commune de refoulement, caractérisé en ce qu'il comprend un unique rotor en forme de cloche à parois lisses du côté intérieur et du côté extérieur, et un stator comportant une première partie, externe, entourant ledit rotor, et une seconde partie, interne, pénétrant à l'intérieur dudit rotor, en ce que, la paroi de ladite première partie du stator située en vis-à-vis du rotor porte des filets dont la profondeur décroît depuis l'entrée d'aspiration, ménagée dans le stator, jusqu'à ladite sortie commune de refoulement, l'espace entre le rotor et ladite première partie du stator formant ledit premier étage de pompage, et en ce que la paroi de ladite seconde partie du stator située en vis-à-vis du rotor porte des filets dont la profondeur décroît depuis ledit orifice d'aspiration ménagé dans le stator, jusqu'à ladite sortie commune de refoulement, l'espace entre le rotor et ladite seconde partie du stator formant ledit second étage de pompage.

L'invention a aussi pour objet une installation de détection de fuite, au moyen d'un gaz traceur, d'une enceinte à tester, comprenant un ensemble mécanique de pompage secondaire à deux étages de pompage, le premier étage ayant une entrée d'aspiration, le second étage ayant un orifice d'aspiration, ladite entrée et ledit orifice débouchant tous les deux à l'extérieur de la pompe, les deux étages ayant une sortie commune de refoulement, ladite entrée d'aspiration étant reliée à un analyseur de gaz, ladite sortie commune de refoulement étant reliée à une pompe primaire par une première canalisation munie d'une première vanne et ledit orifice d'aspiration étant équipé d'une seconde canalisation, munie d'une seconde vanne, pouvant être reliée à ladite enceinte, caractérisée en ce que ledit ensemble mécanique de pompage comprend un unique rotor en forme de cloche à parois lisses du côté intérieur et du côté extérieur, et un stator comportant une première partie, externe, entourant ledit rotor, et une seconde partie, interne, pénétrant à l'intérieur dudit rotor, en ce que, la paroi de ladite première partie du stator située en vis-à-vis du rotor porte des filets dont la profondeur décroît depuis l'entrée d'aspiration, ménagée dans le stator, jusqu'à ladite sortie commune de refoulement, l'espace entre le rotor et ladite première partie du stator formant ledit premier étage de pompage, et en ce que la paroi de ladite seconde partie du stator située en vis-à-vis du rotor porte des filets dont la profondeur décroît depuis ledit orifice d'aspiration ménagé dans le stator, jusqu'à ladite sortie commune de refoulement, l'espace entre le rotor et ladite seconde partie du stator formant ledit second étage de pompage.

Selon une réalisation préférée, une troisième canalisation munie d'une troisième vanne relie ladite seconde canalisation en amont de ladite seconde vanne à ladite première canalisation en aval de ladite première vanne.

L'invention va maintenant être décrite en se reportant au dessin annexé dans lequel :
La figure 1 montre en vue schématique une demi-coupe axiale d'un ensemble mécanique de pompage selon l'invention.
La figure 2 représente le schéma d'une installation de détection de fuite qui inclut un ensemble mécanique de pompage conforme à celui de la figure 1.

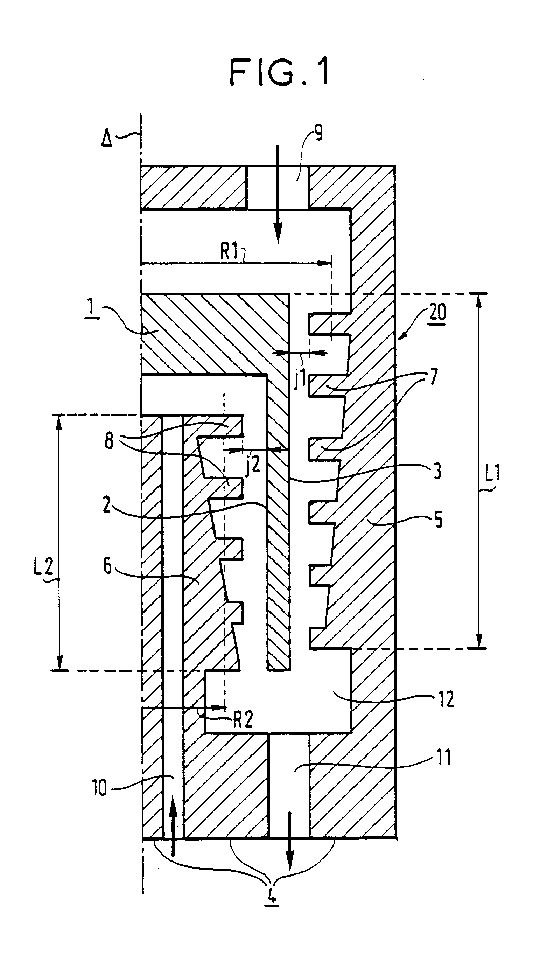

L'ensemble mécanique de pompage 20 représenté figure 1 est un ensemble de pompage à deux étages concentriques du type Holweck à tambour. Il comporte un unique rotor 1 en forme de cloche dont les parois interne 2 et externe 3 sont lisses et un stator 4 en deux parties.

Le stator 4 comprend en effet une première partie 5, externe, entourant le rotor 1 et une seconde partie 6, interne, qui pénètre dans le rotor 1.

La paroi de chaque partie du stator, située en vis-à-vis du rotor 1 porte des filets : 7 pour la première partie 5 du stator et 8 pour la seconde partie 6 du stator. L'espace situé entre le rotor 1 et la première partie 5 du stator 4 constitue le premier étage de l'ensemble mécanique de pompage et il possède une entrée d'aspiration 9 ménagée dans le stator 4 ; et l'espace situé entre le rotor 1 et la seconde partie 6 du stator 4 constitue le second étage de l'ensemble mécanique de pompage et il possède un orifice d'aspiration 10 ménagé dans le stator 4. Comme on le voit, l'entrée d'aspiration 9 et l'orifice d'aspiration 10 débouchent tous les deux à l'extérieur de l'ensemble mécanique de pompage.

L'ensemble de pompage comporte en outre une sortie commune de refoulement 11 qui aboutit bien sûr à l'extérieur et d'autre part dans une chambre annulaire 12 commune au refoulement des deux étages.

Dans chaque étage comme on le voit sur la figure, la profondeur des filets, 7 pour le premier étage et 8 pour le deuxième étage, décroît depuis l'aspiration 9, 10 jusqu'au refoulement 11.

Le taux de compression du premier étage, pour un gaz de masse moléculaire faible tel que l'hélium est de l'ordre de 50 et de l'ordre de 30000 pour l'air. La vitesse de pompage du même premier étage est de l'ordre de 4 l/s pour l'air et de l'ordre de 2,5 l/s pour l'hélium ou un gaz de masse moléculaire voisine. Pour le second étage, la vitesse de pompage est de l'ordre de 3,5 l/s pour l'air et de l'ordre de 2 l/s pour l'hélium.

Un tel ensemble de pompage du type Holweck permet de réaliser des étages de pompage dont les paramètres : taux de compression et vitesse de pompage sont suffisamment indépendants pour obtenir un résultat optimal.

La vitesse de pompage ne dépend pratiquement que de la profondeur des filets en début d'étage à l'aspiration.

Le taux de compression ne dépend pratiquement que du jeu entre rotor et stator et de la longueur de l'étage.

La vitesse de rotation est également un facteur qui détermine la vitesse de pompage et le taux de compression, mais on la choisit suffisamment faible pour que la résistance mécanique de l'ensemble de la pompe en rotation soit excellente.

A titre d'exemple, pour obtenir ces caractéristiques fonctionnelles, on peut utiliser les données constructives suivantes :
- Chaque étage possède cinq filets usinés depuis l'aspiration, sur une longueur de 26 mm qui se subdivisent ensuite chacun en deux, soit dix filets jusqu'au refoulement.
- L'angle d'inclinaison des filets par rapport à l'axe Δ de rotation de l'ensemble mécanique de pompage est de 65°.
- La profondeur des filets à l'aspiration du premier étage est de 4 mm et de 1 mm du côté refoulement.
- La profondeur des filets à l'aspiration du second étage est de 4 mm, et de 1 mm du côté refoulement.
- La longueur L₁ du premier étage est de 90 mm et celle de L₂ du second étage, de 75 mm.
- Le jeu j₁ du premier étage est de 0,2 mm et le jeu j₂ du second étage est de 0,15 mm.
- Le rayon moyen R₁ des filets du premier étage est de 36 mm.
- Le rayon moyen R₂ des filets du second étage est de 30 mm.
- La vitesse nominale de rotation du rotor 1 est de 27000 t/mn.

Comme on le voit sur la figure, la construction mécanique de l'ensemble est telle que la sortie commune de refoulement 11 ainsi que l'orifice d'aspiration 10 du second étage sont situés sur le fond de l'ensemble mécanique de pompage, ce qui permet de simplifier les divers raccordements et également de diminuer les coûts d'usinage de l'ensemble lui-même.

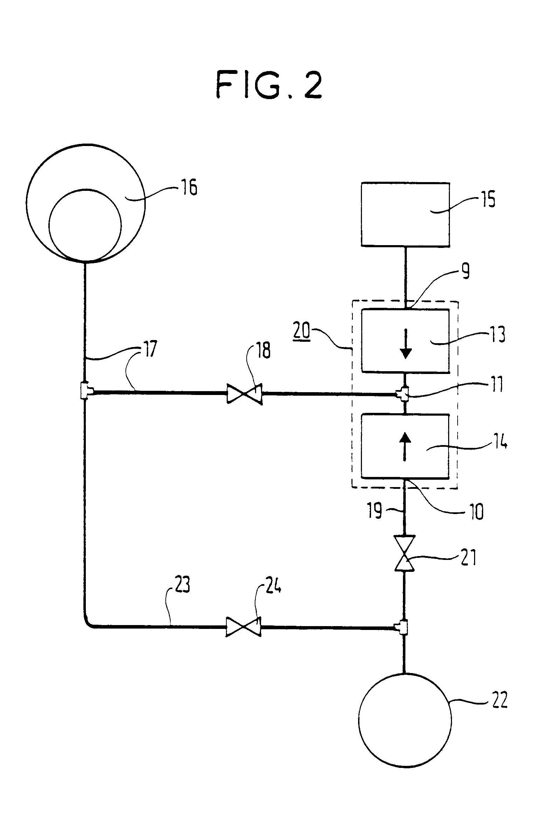

La figure 2 représente le schéma d'une installation de détection de fuite au moyen d'un gaz traceur tel que de l'hélium, qui comprend un ensemble mécanique de pompage secondaire 20 conforme à l'ensemble mécanique de pompage décrit ci-dessus et représenté sur la figure 1.

Dans cette figure, on a référencé 13 le premier étage de pompage et 14 le second étage de pompage de l'ensemble mécanique de pompage 20.

Un analyseur de gaz 15 est relié à l'entrée d'aspiration 9 du premier étage 13, il s'agit par exemple d'un spectromètre de masse calé sur l'hélium. Une pompe primaire 16 est reliée à la sortie commune de refoulement 11 par une première canalisation 17 munie d'une première vanne 18. L'orifice d'aspiration 10 du second étage 14 est équipé d'une seconde canalisation 19 munie d'une seconde vanne 21. Cette seconde canalisation 19 possède à son extrémité une bride de raccordement, non représentée, qui permet de la raccorder à une enceinte à tester 22.

Enfin, une troisième canalisation 23 munie d'une troisième vanne 24 relie la deuxième canalisation 19 en amont de la seconde vanne 21 et la première canalisation 17 en aval de la première vanne 18.

L'installation fonctionne à contre-courant à travers le premier étage 13 qui présente un taux de compression pour l'hélium relativement faible de 50 comme déjà dit ci-dessus, mais élevé de l'ordre de 30000 pour l'air.

Comme il a déjà été dit plus haut, l'ensemble mécanique de pompage secondaire 20 a une vitesse de rotation de 27000 t/mn, ce qui est relativement faible par rapport à la vitesse de rotation des pompes généralement utilisées, turbomoléculaires à ailettes qui tournent fréquemment à plus de 30000 t/mn.

On diminue ainsi l'effet gyroscopique et cela permet de déplacer l'appareil en fonctionnement.

Lorsque l'on effectue un contrôle d'étanchéité sur une pièce 22 dont le volume peut être important, on ferme la troisième vanne 24 et on ouvre les première et seconde vannes 18 et 21. Dans ce mode de fonctionnement, on a l'avantage d'éviter la contamination de la pièce à contrôler 22 par les éventuelles vapeurs d'hydrocarbures provenant de la pompe primaire 16 et qui sont arrêtées par le fort taux de compression, pour ces vapeurs, du second étage de pompage 14, et l'on bénéficie d'un temps de réponse court grâce à la grande vitesse de pompage de l'étage 10 de la pompe secondaire 20 tout en conservant une bonne sensibilité.

Pour les contrôles à cadence rapide sur des pièces 22 de petit volume, on ferme la seconde vanne 21 et on ouvre les première et troisième vannes 18 et 24.

Dans les deux cas, la sensibilité de l'installation ne dépend que de la vitesse de pompage de la pompe primaire 16 et du taux de compression pour l'hélium du premier étage de pompage 13.

## Revendications

1. Ensemble mécanique de pompage (20) pour vide secondaire comprenant deux étages de pompage, le premier étage ayant une entrée d' aspiration (9), le second étage ayant un orifice d'aspiration (10), ladite entrée et ledit orifice débouchant tous les deux à l'extérieur, les deux étages ayant une sortie commune de refoulement (11), caractérisé en ce qu'il comprend un unique rotor (1) en forme de cloche à parois lisses du côté intérieur et du côté extérieur, et un stator (4) comportant une première partie (5), externe, entourant ledit rotor, et une seconde partie (6), interne, pénétrant à l'intérieur dudit rotor (1), en ce que la paroi de ladite première partie du stator située en vis-à-vis du rotor porte des filets (7) dont la profondeur décroît depuis l'entrée d'aspiration (9), ménagée dans le stator, jusqu'à ladite sortie commune de refoulement (4), l'espace entre le rotor et ladite première partie du stator formant ledit premier étage de pompage, et en ce que la paroi de ladite seconde partie du stator située en vis-à-vis du rotor porte des filets (8) dont la profondeur décroît depuis ledit orifice d'aspiration (10) ménagé dans le stator jusqu'à ladite sortie commune de refoulement (11), l'espace entre le rotor et ladite seconde partie du stator formant ledit second étage de pompage.

2. Installation de détection de fuite, au moyen d'un gaz traceur, d'une enceinte à tester, comprenant un ensemble mécanique de pompage secondaire (20) à deux étages de pompage, le premier étage (13) ayant une entrée d'aspiration (9), le second étage (14) ayant un orifice d'aspiration (10), ladite entrée et ledit orifice débouchant tous les deux à l'extérieur de la pompe, les deux étages ayant une sortie commune de refoulement (11), ladite entrée d'aspiration (9) étant reliée à un analyseur de gaz (15), ladite sortie commune de refoulement (11) étant reliée à une pompe primaire (16) par une première canalisation (17) munie d'une première vanne (18) et ledit orifice d'aspiration (10) étant équipé d'une seconde canalisation (19), munie d'une seconde vanne (21), pouvant être reliée à ladite enceinte, caractérisée en ce que ledit ensemble mécanique de pompage (20) comprend un unique rotor (1) en forme de cloche à parois lisses du côté intérieur et du côté extérieur, et un stator (4) comportant une première partie (5), externe, entourant ledit rotor, et une seconde partie (6), interne, pénétrant à l'intérieur dudit en ce que la paroi de ladite première partie du stator située en vis-à-vis du rotor porte des filets (7) dont la profondeur décroît depuis l'entrée d'aspiration (9), ménagée dans le stator, jusqu'à ladite sortie commune de refoulement (11), l'espace entre le rotor et ladite première partie du stator formant ledit premier étage de pompage, et en ce que la paroi de ladite seconde partie du stator située en vis-à-vis du rotor porte des filets (8) dont la profondeur décroît depuis ledit orifice d'aspiration (10) ménagé dans le stator jusqu'à ladite sortie commune de refoulement (11), l'espace entre le rotor et ladite seconde partie du stator formant ledit second étage de pompage.

3. Installation selon la revendication 2, caractérisée en ce qu'une troisième canalisation (23) munie d'une troisième vanne (24) relie ladite seconde canalisation (19) en amont de ladite seconde vanne (21) à ladite première canalisation (17) en aval de ladite première vanne (18).

## Claims

1. A mechanical pump assembly (20) for pumping a secondary vacuum, the assembly comprising two pumping stages, the first stage having a suction inlet (9) and the second stage having a suction orifice (10), said inlet and said orifice both opening out to the outside, both stages having a common delivery outlet (11), the pump assembly being characterized in that it comprises a single bell-shaped rotor (1) having walls which are smooth on the inside and on the outside, and a stator (4) having an outer first portion (5) surrounding said rotor and an inner second portion (6) penetrating inside said rotor (1), in that the rotor-facing wall of said first portion of the stator bears threads (7) of depth which decreases from the suction inlet (9) formed through the stator to said common delivery outlet (4), the space between the rotor and said first portion of the stator constituting said first pumping stage, and in that the rotor-facing wall of said second portion of the stator bears threads (8) of depth which decreases from said suction orifice (10) formed through the stator to said common delivery outlet (11), the space between the rotor and said second portion of the stator forming said second pumping stage.

2. An installation for detecting leaks from a vessel under test by means of a tracer gas, the installation comprising a mechanical secondary pump assembly (20) having two pumping stages, the first stage (13) having a suction inlet (9), the second stage (14) having a suction orifice (10), said inlet and said orifice both opening out to the outside of the pump, the two stages having a common delivery outlet (11), said suction inlet (9) being connected to a gas analyzer (15), said common delivery outlet (11) being connected to a primary pump (16) via a first duct (17) provided with a first valve (18), and said suction orifice (10) being fitted with a second duct (19) provided with a second valve (21), said second duct being suitable for connection to said vessel, the installation being characterized in that said mechanical pump assembly (20) comprises a single bell-shaped rotor (1) having walls which are smooth on the inside and on the outside, and a stator (4) having an outer first portion (5) surrounding said rotor and an inner second portion (6) penetrating inside said rotor (1), in that the rotor-facing wall of said first portion of the stator bears threads (7) of depth which decreases from the suction inlet (9) formed through the stator to said common delivery outlet (4), the space between the rotor and said first portion of the stator constituting said first pumping stage, and in that the rotor-facing wall of said second portion of the stator bears threads (8) of depth which decreases from said suction orifice (10) formed through the stator to said common delivery outlet (11), the space between the rotor and said second portion of the stator forming said second pumping stage.

3. An installation according to claim 2, characterized in that a third duct (23) provided with a third valve (24) connects said second duct (19) upstream from second valve (21) to said first duct (17) downstream from said first valve (18).

## Patentansprüche

1. Mechanische Pumpeinheit (20) zur Herstellung eines Sekundärvakuums mit zwei Pumpstufen, von denen die erste Stufe einen Saugeingang (9) und die zweite Stufe eine Saugöffnung (10) aufweist und wobei sowohl Eingang als auch die Öffnung außerhalb der Einheit münden und die beiden Stufen einen gemeinsamen Auslaß (11) haben, dadurch gekennzeichnet, daß die Einheit einen gemeinsamen Rotor (1) in Form einer Glocke mit glatten Wänden an der Innen- und Außenseite und einen Stator (4) mit einem ersten, den Rotor umgebenden äußeren Abschnitt (5) und einem zweiten, in das Innere des Rotors (1) eindringenden inneren Abschnitt (6) aufweist, und daß die Wand des ersten Abschnitts des Stators dem Rotor gegenüberliegend Gewindegänge (7) trägt, deren Tiefe vom Saugeinlaß (9) her, der in den Stator eingearbeitet ist, bis zum gemeinsamen Auslaß (4) abnimmt, wobei der Raum zwischen dem Rotor und dem ersten Abschnitt des Stators die erste Pumpstufe bildet, und daß die Wand des zweiten Abschnitts des Stators dem Rotor gegenüberliegend Gewindegänge (8) trägt, deren Tiefe von der Saugöffnung (10), die in den Stator eingearbeitet ist, bis zum gemeinsamen Auslaß (11) abnimmt, wobei der Raum zwischen dem Rotor und dem zweiten Abschnitt des Stators die zweite Pumpstufe bildet.

2. Anlage zur Erfassung eines Lecks eines Testgefäßes mit Hilfe eines Spürgases, die eine mechanische Sekundärpumpeinheit (20) mit zwei Pumpstufen enthält, wobei die erste Stufe (13) einen Saugeingang (9) und die zweite Stufe (14) eine Saugöffnung (10) aufweist, wobei sowohl der Eingang als auch die Öffnung außerhalb der Einheit münden und die beiden Stufen einen gemeinsamen Auslaß (11) haben, wobei der Saugeinlaß (9) an einen Gasanalysator (15) angeschlossen ist und der gemeinsame Auslaß (11) mit einer Primärpumpe (16) durch eine erste Rohrleitung (17) verbunden ist, die ein erstes Ventil (18) aufweist, während die Saugöffnung (10) an eine zweite Rohrleitung (19) angeschlossen ist, die mit einem zweiten Ventil (21) versehen ist, das an das Testgefäß angeschlossen werden kann, dadurch gekennzeichnet, daß die mechanische Einheit einen gemeinsamen Rotor (1) in Form einer Glocke mit glatten Wänden an der Innen- und Außenseite und einen Stator (4) aufweist, der einen ersten, den Rotor umgebenden äußeren Abschnitt (5) und einen zweiten, in das Innere des Rotors (1) eindringenden inneren Abschnitt (6) aufweist, und daß die Wand des ersten Abschnitts des Stators dem Rotor gegenüberliegend Gewindegänge (7) trägt, deren Tiefe vom Saugeinlaß (9) her, der in den Stator eingearbeitet ist, bis zum gemeinsamen Auslaß (4) abnimmt, wobei der Raum zwischen dem Rotor und dem ersten Abschnitt des Stators die erste Pumpstufe bildet, und daß die Wand des zweiten Abschnitts des Stators dem Rotor gegenüberliegend Gewindegänge (8) trägt, deren Tiefe von der Saugöffnung (10), die in den Stator eingearbeitet ist, bis zum gemeinsamen Auslaß (11) abnimmt, wobei der Raum zwischen dem Rotor und dem zweiten Abschnitt des Stators die zweite Pumpstufe bildet.

3. Anlage nach Anspruch 2, dadurch gekennzeichnet, daß eine dritte Rohrleitung (23), die mit einem dritten Ventil (24) versehen ist, die zweite Rohrleitung (19) vor dem zweiten Ventil (21) mit der ersten Rohrleitung (17) hinter dem ersten Ventil (18) verbindet.
